# EUROPEAN PATENT APPLICATION

(11) **EP 0 990 910 A1**
(43) Date of publication of application: **05.04.2000**
(21) Application number: 98957221.9
(22) Date of filing: 08.12.1998
(51) Int. Cl.: G01N 37/00, G01B 7/34

(54) **METHOD OF PRODUCING PROBE OF TUNNEL SCANNING MICROSCOPE AND THE PROBE**

(30) Priority: 09.12.1997 JP 33889497
(71) Applicant: Japan Science and Technology Corporation, Kawaguchi-shi, Saitama 332-0012 (JP); Yamamoto, Yoshihisa, California 94305 (US); Yamaguchi, Fumiko, Palo Alto, CA 94301 (US)
(72) Inventor: YAMAMOTO, Yoshihisa, Stanford, CA 94305 (US); YAMAGUCHI, Fumiko, Palo Alto, CA 94301 (US); HUANG, Dehuan, Musashino-shi Tokyo 180-0022 (JP); MACHIDA, Susumu, Tokyo 180-0012 (JP)
(74) Representative: Howden, Christopher Andrew
(86) International application number: JP9805543
(87) International publication number: WO9930171

(57) **Abstract**

To provide a method of fabricating a probe for a scanning tunneling microscope, which method can prevent contamination of the probe and can realize high resolution through use of ordinary operation functions of an STM, without necessity of improving the STM, as well as a probe fabricated by the method.

In fabrication of a probe for a scanning tunneling microscope, a tungsten probe material (1) is disposed within a vacuum chamber of a scanning tunneling microscope such that the tungsten probe material (1) is opposed to a sample substrate (2); the distance between the tungsten probe material (1) and the sample substrate (2) is adjusted to 0.5 to 2 angstroms, and a DC voltage of 10 to 20 V is applied between the tungsten probe material (1) and the sample substrate (2); tunnel current (6) is caused to flow through the tip end to thereby heat the tip end, so that atoms evaporate from the tip end of the tungsten probe material (1); evaporation is continued until the distance between the probe material (1) and the sample substrate (2) becomes 10 to 20 angstroms such that a single atom is held at the tip end of the tungsten probe material (1); and the supply of the voltage is stopped, and the tungsten probe material (1) is cooled.

## Description

### TECHNICAL FIELD

The present invention relates to a method of fabricating a probe for a scanning tunneling microscope and to a probe fabricated by the method.

### BACKGROUND ART

Conventionally, a probe for a scanning tunneling microscope (hereinafter referred to as "STM") has been fabricated by a method disclosed in, for example, the following literature.
(1) V.T. Binh, *et al*.: "Electron Field Emission from Atom-Sources: Fabrication, Properties, and Application of Nanotips," Advance in Imaging and Electron Physics, 95, 63-153, Academic Press Inc. (1996).
(2) M. Tomitori, *et al*.: "Reproducibility of Scanning Tunneling Spectroscopy of Si(111) 7x7 Using a Build-up Tip," Surface Science 355, 21-30 (1996).

In the above-described conventional techniques, during fabrication of an STM probe, a probe material is heated from the outside, and vaporization upon application of an electric field is not utilized for shaping a tip end of the probe material.

However, in the above-described conventional techniques, an STM probe is fabricated within a field emission microscopy (FEM) in a state in which a voltage of 10 kV or higher is applied between a probe material and a substrate which are disposed 5 cm away from each other, in order to utilize field emission of electrons. Therefore, the probe material is not heated by tunnel current, and consequently must be heated from the outside.

In addition, since the distance between the probe material and the substrate is relatively large, the electric field strength is as low as 2x10⁵ V/m, so that vaporization of the probe material due to an electric field does not occur.

An object of the present invention is to solve the above-mentioned problems and to provide a method of fabricating a probe for a scanning tunneling microscope, which method can prevent contamination of the probe and can realize high resolution through use of ordinary operation functions of an STM, without necessity of improving the STM, as well as a probe fabricated by the method.

### DISCLOSURE OF THE INVENTION

To achieve the above object, the present invention provides followings.
(1) A method of fabricating a probe for a scanning tunneling microscope, the method comprising the steps of: disposing a probe material within a vacuum chamber of a scanning tunneling microscope such that the probe material is opposed to a sample; adjusting the distance between the probe material and the sample to a first distance and applying a predetermined voltage between the probe material and the sample; causing atoms to evaporate from the tip end of the probe material and causing tunnel current to flow through the tip end to thereby heat the tip end; continuing evaporation until the distance between the probe material and the sample reaches a second distance; collecting atoms of the probe material to the tip end of the probe material through dispersion such that a single atom is held at the tip end of the probe material; and stopping the supply of the voltage and cooling the probe material.
(2) In the method of fabricating a probe for a scanning tunneling microscope as described in (1) above, the probe material is tungsten.
(3) In the method of fabricating a probe for a scanning tunneling microscope as described in (1) above, the probe material is silicon.
(4) In the method of fabricating a probe for a scanning tunneling microscope as described in (3) above, a plurality of Si probe posts are formed on a silicon substrate in order to fabricate a multi-electrode probe.
(5) In the method of fabricating a probe for a scanning tunneling microscope as described in (1) above, the first distance is 0.5 to 2 angstroms.
(6) In the method of fabricating a probe for a scanning tunneling microscope as described in (1) above, the predetermined voltage is DC 10 to 20 volts.
(7) In the method of fabricating a probe for a scanning tunneling microscope as described in (1) above, the tip end of the probe material is heated by tunnel current to a temperature about 1/3 to 2/5 the melting point of the probe material.
(8) In the method of fabricating a probe for a scanning tunneling microscope as described in (1) above, the second distance is preferably 10 to 20 angstroms.
(9) A probe for a scanning tunneling microscope, comprising a base portion formed of a probe material, a pyramidal shape portion formed at the tip end portion of the base portion, and a tip portion formed on the pyramidal shape portion and formed of a single atom of the probe material, wherein the pyramidal shape portion is formed of atoms of the probe material that are gathered by means of dispersion, and excessive atoms that disperse subsequently are removed through evaporation.
(10) A probe for a scanning tunneling microscope, comprising an Si substrate having a plurality of Si posts each serving as a base portion, a pyramidal shape portion formed at the tip end portion of the base portion, and a tip portion formed on the pyramidal shape portion and formed of a single atom of the Si post, wherein the pyramidal shape portion is formed of atoms of the Si post that are gathered by means of dispersion, and excessive atoms that disperse subsequently are removed through evaporation.

### BRIEF DESCRIPTION OF DRAWINGS

FIG. 1 is a schematic view of an apparatus for fabricating an STM probe according to a first embodiment of the present invention;
FIGS. 2(a) - 2(d) are views showing the steps of a process for fabricating an STM probe according to the first embodiment of the present invention;
FIG. 3 is a schematic view of an apparatus for fabricating a multi-electrode probe according to a second embodiment of the present invention;
FIG. 4 is a plan view of a probe material used in the process for fabricating a multi-electrode probe according to the second embodiment of the present invention;
FIG. 5 is a perspective view of the probe material used in the process for fabricating a multi-electrode probe according to the second embodiment of the present invention;
FIGS. 6(a) - 6(d) are views showing the steps of a process for fabricating an STM probe according to the second embodiment of the present invention; and
FIG. 7 is a graph showing results of an experiment performed to determine characteristics of an STM probe fabricated by use of the apparatus according to the first embodiment of the present invention.

### BEST MODE FOR CARRYING OUT THE INVENTION

Embodiments of the present invention will next be described in detail with reference to the drawings.

A first embodiment of the present invention will first be described.

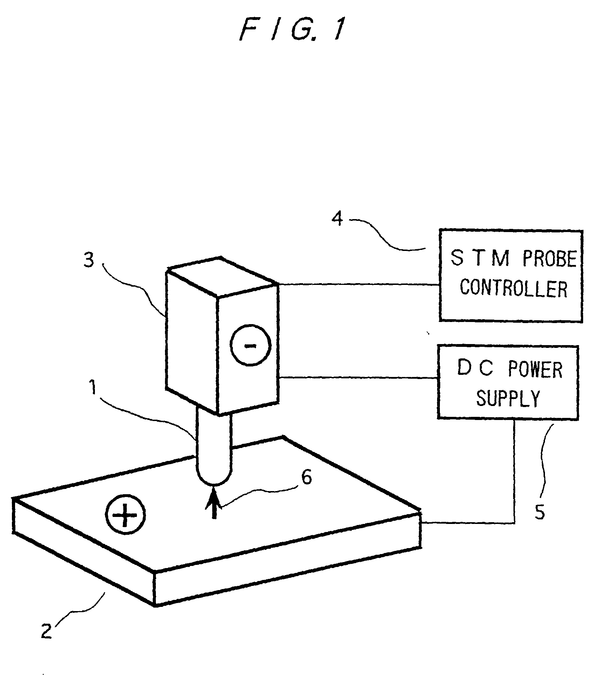

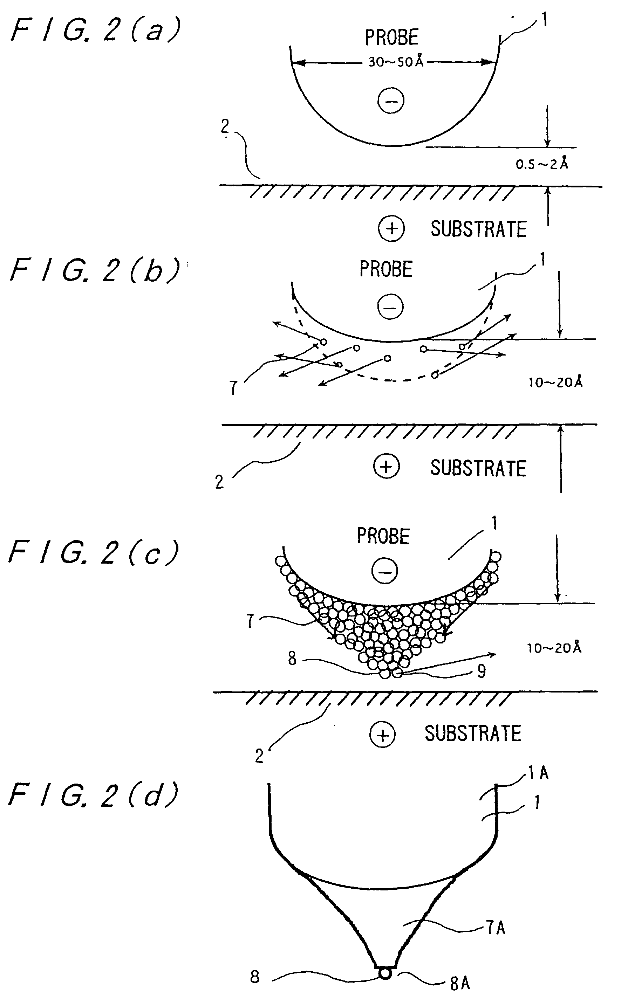

FIG. 1 is a schematic view of an apparatus for fabricating an STM probe according to the first embodiment of the present invention; and FIGS. 2(a) - 2(d) are views showing the steps of a process for fabricating an STM probe according to the first embodiment of the present invention. Here, an example method for fabricating a tungsten probe will be described.

In FIG. 1, reference numeral 1 denotes a tungsten probe material, reference numeral 2 denotes a substrate serving as an STM sample, reference numeral 3 denotes an STM probe holder, reference numeral 4 denotes an STM probe controller, reference numeral 5 denotes a DC power supply, and reference numeral 6 denotes tunnel current.

Next, a process for fabricating the STM probe according to the present embodiment will be described with reference to FIGS. 1 and 2.
(1) First, the tungsten probe material 1, which is fabricated through ordinary etching, is attached to the STM probe holder 3 within a vacuum chamber of the STM. As shown in FIG. 2(a), the tungsten probe material 1 has a spherical tip having a diameter of 30 to 50 angstroms. A metal substrate or a measurement sample is used as the substrate 2. The STM probe controller 4 is operated in order to set the distance between the tungsten probe material 1 and the substrate 2 to 0.5 - 2 angstroms, and the control is then stopped.
(2) Subsequently, the DC power supply 5 is connected to the tungsten probe material 1 and the substrate 2 such that the tungsten probe material 1 assumes a negative polarity and the substrate 2 assumes a positive polarity. A DC voltage of 10 - 20 V is applied, and the voltage is maintained constant during the fabrication. Due to application of the voltage, the electric field at the tip end of the tungsten probe material 1 increases to about 1x10¹⁰ V, so that atoms 7 start to evaporate from the tip end of the tungsten probe material 1. At the same time, a strong tunnel current 6 flows through the tungsten probe material 1, so that the tip end of the tungsten probe material 1 is heated thereby. As a result, the temperature at the tip end of the tungsten probe material 1 increases to about 1200°C, which is about 1/3 to 2/5 the melting point of tungsten.
   Atoms 7 are caused to evaporate from the tip end of the tungsten probe material 1 until the distance between the tungsten probe material 1 and the substrate 2 becomes 10 to 20 angstroms. Thanks to the evaporation, contaminants present, on the surface of the tip end of the tungsten probe material 1 are removed, so that atomic-level cleaning is performed.
(3) When evaporation of atoms 7 stops, atoms 7 on the surface of the tungsten probe material 1 move to the positive electrode (substrate) 2 side, due to dispersion caused by the electric field, so that atoms 7 gather to the tip end of the tungsten probe material 1. Due to this movement of atoms 7, the electric field at the tip end of the tungsten probe material 1 becomes stronger. As a result, as shown in FIG. 2(c), tungsten atoms 7 form a pyramidal shape.
   When the number of atoms 8 at the tip end of the tungsten probe material 1 decreases to one, the atom 9 that has subsequently moved to the tip end evaporates, because the atom 9 is unstable. Accordingly, the tip end of the tungsten probe material 1 is always occupied by a single atom.
(4) Subsequently, the voltage supply from the DC power supply 5 is stopped, and the tungsten probe material 1 is cooled gradually. As a result, as shown in FIG. 2(d), an STM probe having one atom 8 at its tip end is obtained. The thus-obtained STM probe has a base portion lA of the probe material, a pyramidal shape portion 7A formed at the tip end portion of the base portion 1A, and a tip portion 8A that is formed on the pyramidal shape portion 7A and is formed of a single atom of the probe material. The pyramidal shape portion 7A is formed of atoms of the probe material that are gathered by means of dispersion, and excessive atoms that disperse subsequently are removed through evaporation.

Next, a second embodiment of the present invention will be described.

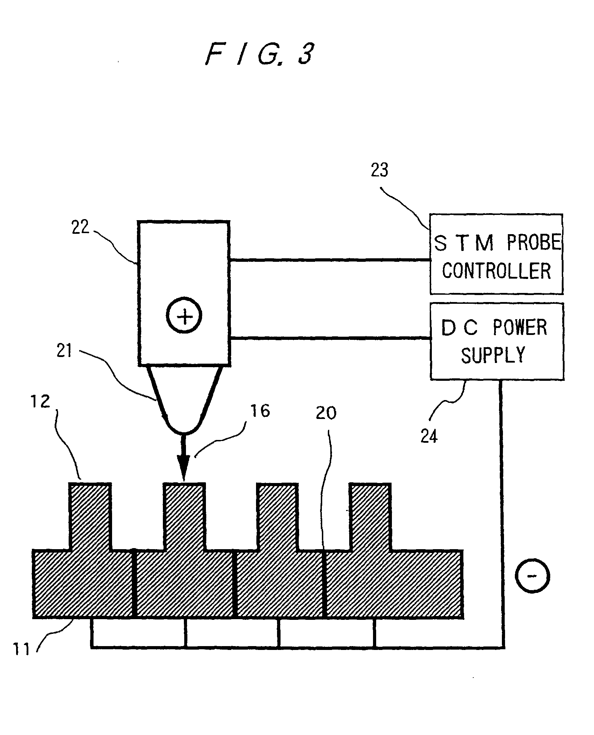

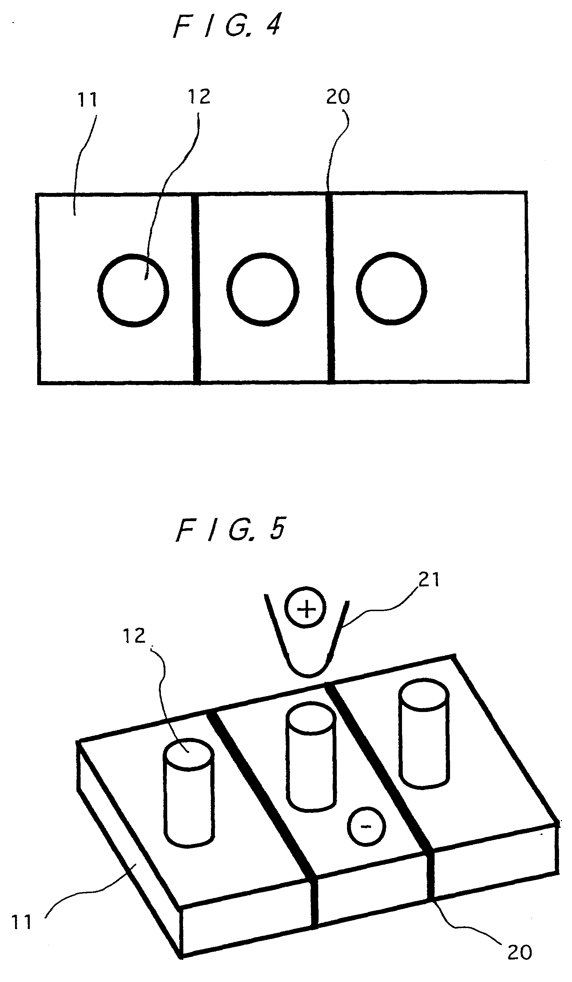

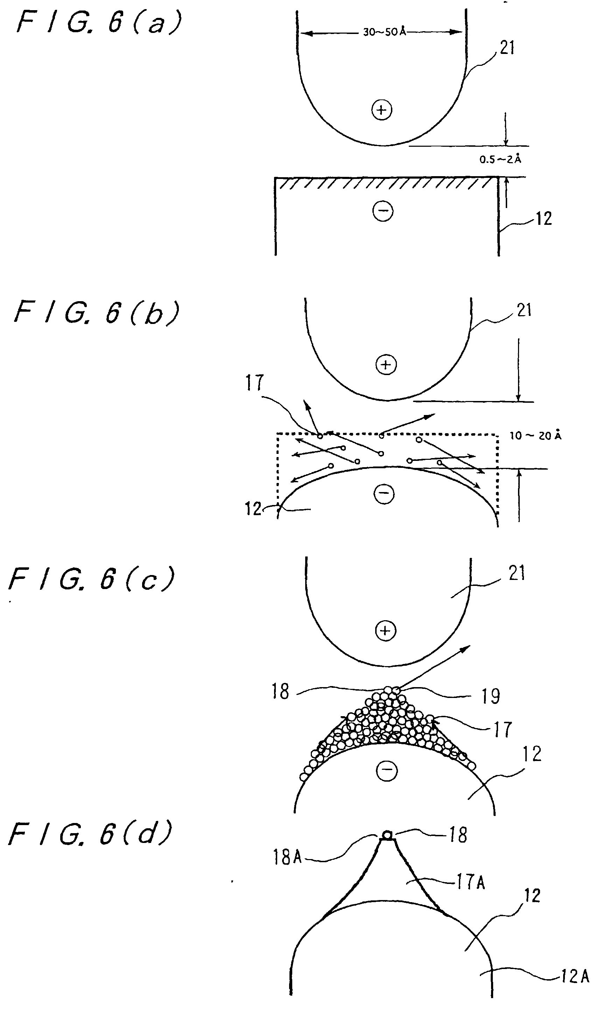

FIG. 3 is a schematic view of an apparatus for fabricating a multi-electrode probe according to the second embodiment; FIGS. 4 and 5 are explanatory views showing a process for fabricating a multi-electrode probe according to the second embodiment of the present invention; and FIGS. 6(a) - 6(d) are views showing the steps of a process for fabricating an STM probe according to the second embodiment of the present invention.

In FIG. 3, reference numeral 11 denotes Si substrates, reference numeral 12 denotes Si probe posts, reference numeral 20 denotes insulation layers, reference numeral 21 denotes an ordinary STM probe (tungsten probe), reference numeral 22 denotes an STM probe holder, reference numeral 23 denotes an STM probe controller, reference numeral 24 denotes a DC power supply, and reference numeral 16 denotes tunnel current.

In the present embodiment, as shown in FIGS. 4 and 5, the Si substrates 11 are used as material of a multi-electrode probe. The Si substrates 11 are etched in order to form the Si probe posts 12 each having a diameter of 30 to 50 angstroms, which are then electrically isolated from each other by means of the insulation layers 20.

Subsequently, the Si substrates 11 having the Si probe posts 12 are placed in the vacuum chamber of the STM such that the tungsten probe 21 is opposed to the Si probe posts 12, and a multi-electrode probe is formed on the Si substrates 11 in the same manner as in the first embodiment.

Next, a process for fabricating the multi-electrode probe according to the present embodiment will be described with reference to FIGS. 3 to 6.
(1) First, as shown in FIG. 6(a), the Si substrates 11 having the Si probe posts 12 fabricated in the above-described manner are placed on the side of an STM sample side, and the tungsten probe 21 fabricated through ordinary etching is attached to the STM probe holder 22 within the vacuum chamber of the STM. The tungsten probe 21 has a spherical tip having a diameter of 30 to 50 angstroms. The STM probe controller 23 is operated in order to set the distance between the tungsten probe 21 and the Si probe posts of the Si substrates to 0.5 - 2 angstroms, and the control is then stopped.
(2) Subsequently, the DC power supply 24 is connected to the Si substrates and the tungsten probe 21 such that the Si probe posts 12 of the Si substrates assume a negative polarity and the tungsten probe 21 assumes a positive polarity. A DC voltage of 10 - 20 V is applied, and the voltage is maintained constant during the fabrication. Due to application of the voltage, the electric field at the tip end of the corresponding Si probe post 12 increases to about 1x10¹⁰ V, so that, as shown in FIG. 6(b), atoms 17 start to evaporate from the tip end of the Si probe post 12. At the same time, a strong tunnel current 16 flows through the Si probe post 12, so that the tip end of the Si probe post 12 is heated by the tunnel current 16. As a result, the temperature at the tip end of the Si probe post 12 increases to about 400°C, which is about 1/3 to 2/5 the melting point of Si.
   Atoms 17 are caused to evaporate until the distance between the tip end of the Si probe post 12 and the tungsten probe 21 becomes 10 to 20 angstroms. Thanks to the evaporation, contaminants present on the surface of the tip end of the Si probe post 12 are removed, so that atomic-level cleaning is performed.
(3) When evaporation of atoms 17 stops, atoms 17 on the surface of the Si probe post 12 move to the positive electrode (tungsten probe) side, so that atoms 17 gather to the tip end of the Si probe post 12. Due to this dispersion, the electric field at the tip end of the Si probe post 12 becomes stronger. As a result, as shown in FIG. 6(c), tungsten atoms 17 form a pyramidal shape.
   When the number of atoms 18 at the tip end of the Si probe post 12 decreases to one, the atom 19 that has subsequently moved to the tip end evaporates, because the atom 19 is unstable. Accordingly, the tip end of the Si probe post 12 is always occupied by a single atom.
(4) Subsequently, the voltage supply from the DC power supply 24 is stopped, and the Si probe post 12 is cooled gradually. As a result, an STM probe having one atom 8 at its tip end is obtained. The thus-obtained STM probe has a base portion 12A of the probe material, a pyramidal shape portion 17A formed at the tip end portion of the base portion 12A, and a tip portion 18A that is formed on the pyramidal shape portion 17A and formed of a single atom of the probe material. The pyramidal shape portion 17A is formed of atoms of the probe material that are gathered by means of dispersion, and excessive atoms that disperse subsequently are removed through evaporation.
(5) Subsequently, the STM probe controller 23 is operated to move the tungsten probe 21 in order to form an STM probe on each of the remaining Si probe posts 12.

In the first and second embodiments, the material for the STM probe is not limited to tungsten and Si, and polycrystalline material may be used. However, a monocrystalline material enables stable formation of a tip end of the probe having a single atom, because the atomic arrangement of the monocrystalline material is determined univocally.

Further, in the first and second embodiments, the probe material is heated mainly by tunnel current. However, an effective measure for quickly evaporating and dispersing atoms is to further heat the probe material by auxiliary heating means other than tunnel current.

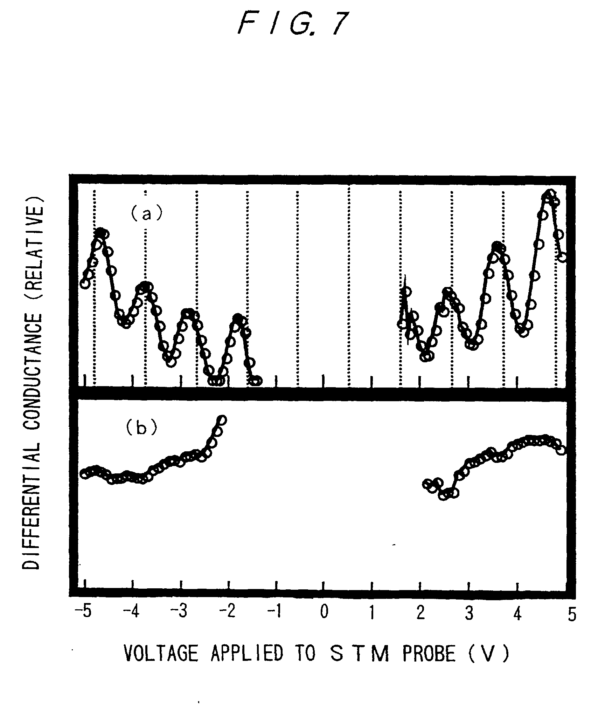

FIG. 7 shows results of an experiment in which an STM tungsten probe was fabricated according to the first embodiment of the present invention and the STM probe was confirmed to have a single atom at its tip by use of an STM. In FIG. 7, the horizontal axis shows the voltage applied to the STM probe, and the vertical axis shows a differential conductance obtained from tunnel current. In FIG. 7, the upper trace (a) shows characteristics in the case where only one atom is present at the tip end of the STM probe, in which the differential conductance increases discretely with applied voltage. This phenomenon occurs because tunneling of electrons is restricted by a Coulomb blocked effect that occurs when tunnel current flows through the single atom at the tip. The lower trace (b) shows characteristics in the case where the single atom is mechanically removed from the tip end of the STM probe. Since electrons tunnel many (three in this case) atoms at the tip end, the Coulomb blocked effect is lost, so that the characteristics do not become discrete.

In the above-described embodiment, tungsten or silicon is used as a probe material. However, even when gold, platinum, or other probe material is used, the probe can be fabricated in the same manner.

The present invention is not limited to the above-described embodiment. Numerous modifications and variations of the present invention are possible in light of the spirit of the present invention, and they are not excluded from the scope of the present invention.

### INDUSTRIAL APPLICABILITY

As having been described in detail, the present invention provides the following advantageous effects.
(A) Since an STM probe is fabricated within the vacuum chamber of an STM, contamination of the probe can be prevented.
(B) An STM can be fabricated through use of ordinary operation functions of an STM, without necessity of improving the STM.
(C) Since atoms at the tip end of the probe are evaporated by use of electric field to thereby clean the surface of the probe, movement of atoms is facilitated, and a clean probe can be fabricated.
(D) When tunnel current is caused to flow through adjustment of the inter-probe distance, an STM probe can be fabricated through use of a low applied voltage.
   Since only the tip end of the STM probe is heated by tunnel current, the tip end is cooled rapidly upon stoppage of application of voltage, so that the shape of the tip end is maintained.
(E) When an STM probe is fabricated, a probe material can be heated by tunnel current, without being heated from the outside, in order to obtain the STM probe.
(F) Since the number of atoms at the tip end of an STM probe can be decreased to one, maximized resolution can be obtained through use of such an STM probe.
(G) Even when the shape of the tip end changes due to electrical or mechanical breakage, the shape of the tip end can be restored repeatedly within the STM vacuum chamber.
(H) Since use of a multi-electrode probe enables application of electric fields parallel to the surface of a substance, observation of undiscovered phenomena at the substance of the substance is enabled.

## Claims

1. A method of fabricating a probe for a scanning tunneling microscope, said method comprising the steps of:
(a) disposing a probe material within a vacuum chamber of a scanning tunneling microscope such that said probe material is opposed to a sample;
(b) adjusting the distance between said probe material and said sample to a first distance and applying a predetermined voltage between said probe material and said sample;
(c) causing atoms to evaporate from the tip end of said probe material and causing tunnel current to flow through the tip end to thereby heat the tip end;
(d) continuing evaporation until the distance between said probe material and said sample reaches a second distance;
(e) collecting atoms of said probe material to the tip end of said probe material through dispersion such that a single atom is held at the tip end of said probe material; and
(f) stopping the application of the voltage and cooling said probe material.

2. A method of fabricating a probe for a scanning tunneling microscope according to Claim 1, wherein said probe material is tungsten.

3. A method of fabricating a probe for a scanning tunneling microscope according to Claim 1, wherein said probe material is silicon.

4. A method of fabricating a probe for a scanning tunneling microscope according to Claim 3, wherein a plurality of Si probe posts are formed on a silicon substrate in order to fabricate a multi-electrode probe.

5. A method of fabricating a probe for a scanning tunneling microscope according to Claim 1, wherein said first distance is 0.5 to 2 angstroms.

6. A method of fabricating a probe for a scanning tunneling microscope according to Claim 1, wherein said predetermined voltage is DC 10 to 20 volts.

7. A method of fabricating a probe for a scanning tunneling microscope according to Claim 1, wherein the tip end of said probe material is heated by tunnel current to a temperature about 1/3 to 2/5 the melting point of said probe material.

8. A method of fabricating a probe for a scanning tunneling microscope according to Claim 1, wherein said second distance is 10 to 20 angstroms.

9. A probe for a scanning tunneling microscope, comprising:
(a) a base portion formed of a probe material;
(b) a pyramidal shape portion formed at the tip end portion of said base portion; and
(c) a tip portion formed on said pyramidal shape portion and formed of a single atom of said probe material,
wherein said pyramidal shape portion is formed of atoms of said probe material that are gathered by means of dispersion, and excessive atoms that disperse subsequently are removed through evaporation.

10. A probe for a scanning tunneling microscope, comprising:
(a) an Si substrate having a plurality of Si posts each serving as a base portion;
(b) a pyramidal shape portion formed at the tip end portion of said base portion; and
(c) a tip portion formed on said pyramidal shape portion and formed of a single atom of said Si post,
wherein said pyramidal shape portion is formed of atoms of said Si post that are gathered by means of dispersion, and excessive atoms that disperse subsequently are removed through evaporation.
